# EUROPÄISCHE PATENTANMELDUNG

(11) **EP 1 098 088 A2**
(43) Veröffentlichungstag der Anmeldung: **09.05.2001**
(21) Anmeldenummer: 00122192.8
(22) Anmeldetag: 13.10.2000
(51) Int. Cl.: F03B 11/00, F04D 29/16, F01D 11/00, F16J 15/40

(54) **Verfahren und Vorrichtung zum Abdichten eines Raums**

(30) Priorität: 04.11.1999 AT 185399
(71) Anmelder: VA TECH VOEST MCE GmbH & Co., 4031 Linz (AT)
(72) Erfinder: Schneeberger Markus, Dipl.-Ing., 4040 Linz (AT); Wurm, Erich, Dipl.-Ing., 4232 Hagenberg (AT)
(74) Vertreter: Rieberer, Stefan, Dipl.-Ing.

(57) **Zusammenfassung**

Die Erfindung betrifft Verfahren und Vorrichtungen zum Abdichten eines Raums zwischen zumindest zwei relativ zueinander bewegbaren Oberflächen, wobei zwischen einem Teilbereich der ersten Oberfläche und einem Teilbereich der zweiten Oberfläche ein Medium, insbesondere eine Flüssigkeit, durch Kühlen verfestigt wird. Beispielsweise ist zum Abdichten eines Spalts zwischen dem Gehäuse und dem Laufrad einer hydraulischen Strömungsmaschine (Turbine), insbesondere einer Überdruckturbine vorgesehen, dass Flüssigkeit (17) durch den jeweils feststehenden Teil (5) in eine ringförmige, die Drehachse des Laufrads (4) umschließende Vertiefung des festehenden Teils (5) zugeführt und in der Vertiefung verfestigt wird, sodass ein Gleitring (6) gebildet wird, und anschließend der Gleitring (6) zum Abdichten gegen die Oberfläche des Laufrads (4) bewegt wird. Diese Dichtungen sind bei hohen Umfangsgeschwindigkeiten einsetzbar und verringern Wartungsarbeiten, die auf den Verschleiß der Dichtung zurückzuführen sind. Insbesondere wird der Wirkungsrad von Turbinen erhöht und der Achsschub reduziert.

## Beschreibung

Die Erfindung betrifft ein Verfahren zum Abdichten eines Raums zwischen zumindest zwei relativ zueinander bewegbaren Oberflächen, wobei zwischen einem Teilbereich der ersten Oberfläche und einem Teilbereich der zweiten Oberfläche ein Medium, insbesondere eine Flüssigkeit, durch Kühlen verfestigt wird, sowie ein Verfahren zum Abdichten eines Raums zwischen zumindest teilweise gegenüberliegenden Oberflächen eines ersten Teils und eines relativ dazu rotierenden zweiten Teils, wobei zwischen der Oberfläche des ersten und der des zweiten Teils ein Medium durch Kühlen verfestigt wird, sowie ein Verfahren zum Abdichten eines Spalts zwischen dem Gehäuse und dem Laufrad einer Turbine, insbesondere einer Überdruckturbine, sowie entsprechende Vorrichtungen.

Bei hydraulischen Turbinen und hier besonders bei Francisturbinen durchströmt das Wasser das Laufrad nicht nur in den Schaufelkanälen, sondern es kann das Laufrad trotz der aufwendigen Spaltdichtungen auch oben und seitlich umströmen. Moderne Labyrinthdichtungen zwischen dem Laufradboden und dem Turbinendeckel bzw. zwischen dem Laufradkranz und dem Leitradring werden mit Spalthöhen von etwa einem Millimeter bei Laufraddurchmessern von oft mehreren Metern ausgeführt. Die Umfangsgeschwindigkeiten an der Dichtstelle betragen bis zu 35 m/s und es müssen Drücke von bis zu 30 bar bewältigt werden. Bei einer mittelgroßen Turbine können etwa 0,5 m³ Wasser pro Sekunde durch die Spaltdichtungen strömen.

Aufgrund der hohen Umfangsgeschwindigkeiten an der Dichtstelle war es bisher nicht möglich, eine völlige Abdichtung eines Francisturbinen-Laufrades gegen den Oberwasserdruck herzustellen. Es wird daher stets eine gewisse Spaltwassermenge in Kauf genommen.

Es gehen - je nach Anlage - rund ein Prozent der für die Energieerzeugung zur Verfügung stehenden Wassermenge durch Spaltströmungen verloren. Bei heute garantierten Turbinen-Wirkungsgraden von bis zu 95% liegt in der Vermeidung der Spaltströmung ein beachtliches wirtschaftliches Potential.

Im Prinzip könnte man zumindest die Spaltverluste am Laufradboden vermeiden, indem man den zwischen Laufrad und Turbinendeckel wirkenden hohen Druck in Kauf nimmt. Der dann aber von oben auf das Laufrad wirkende Wasserdruck (etwa 70% des Oberwasserdrucks) erzeugt auf der großen Kreisringfläche des Laufradbodens einen so großen Achsschub nach unten, daß die Turbinen- und Generatorwelle sowie das Axiallager stark überlastet wären.

Aus diesem Grund ist es notwendig, im Laufradboden Druckentlastungsbohrungen oder eine eigene Entlastungsleitung vorzusehen. Denn nur so kann sich jene Strömung einstellen, die notwendig ist, um den hohen Druck in den Spaltdichtungen abzudrosseln und den Achsschub zu begrenzen. Diese Maßnahme löst jedoch Probleme aufgrund zu hoher Achsschübe nur unzureichend und verringert den Wirkungsgrad der Turbine.

In der US 3 612 713 A wird eine gattungsgemäßes Verfahren mit einer ringfömigen Dichtung unter Verwendung von Eis für den Einsatz in Wasserturbinen gezeigt. Der vom Spaltwasser durchströmte Spaltraum wird durch Kühlung vereist, damit verringert sich die Spalthöhe und es strömt wesentlich weniger Wasser durch, völlige Dichtheit ist jedoch nicht erreichbar.

Zudem muss bei der Verfestigung der Flüssigkeit die Energie zum Erneuern der Eisschicht durch die bereits vorhandene Eisschicht transportiert werden, da der Eisring immer nur an der Oberfläche des Eisrings, welcher der Kühleinrichtung gegenüberliegt, gebildet werden kann. Etwaige Unregelmäßigkeiten im Eisring werden dadurch noch verstärkt.

Eine Aufgabe der vorliegenden Erfindung besteht nun darin, die erwähnten Nachteile zu überwinden und ein Verfahren und entsprechende Vorrichtungen zum Abdichten eines Raums zwischen zumindest zwei relativ zueinander bewegbaren Oberflächen zu entwickeln, die allgemein auch bei hohen Umfangsgeschwindigkeiten einsetzbar sind und Wartungsarbeiten, die auf den Verschleiß der Dichtung zurückzuführen sind, zu verringern. Insbesondere soll eine Lösung für das Abdichten eines Spaltes zwischen dem Laufrad und dem Turbinengehäuse einer Turbine gefunden werden, die den Wirkungsgrad erhöht.

Das erfindungsgemäße Verfahren ist dadurch gekennzeichnet, dass das Medium durch die erste Oberfläche hindurch in eine Vertiefung der ersten Oberfläche zugeführt, in der Vertiefung verfestigt wird und anschließend das verfestigte Medium zum Abdichten von der ersten Oberfläche gegen die zweite Oberfläche bewegt wird. Die entsprechende Vorrichtung ist dadurch gekennzeichnet, dass die erste Oberfläche eine Vertiefung aufweist, in welche ein Mittel zum Zuführen des Mediums mündet und welche ein Mittel zum Verfestigen des Mediums in der Vertiefung sowie ein Mittel zum Bewegen des verfestigten Mediums aus der Vertiefung von der ersten Oberfläche gegen die zweite Oberfläche aufweist.

Neu an dieser Erfindung ist, dass der auf diese Weise durch Kühlen eines Mediums gebildete Dichtungskörper zwar durch Reibung abgenützt wird, jedoch durch fortgesetztes Kühlen immer wieder neu gebildet werden kann, und zwar in der Art, dass zu jeder Zeit größtmögliche Dichtheit gegeben ist. Das Prinzip der Erfindung besteht darin, durch dosiertes Einbringen von Medium in eine Vertiefung, die dem Dichtungskörper beim Verfestigen eine bestimmte Form verleiht, zu bilden und diesen anschließend gegen die zweite Oberfläche zu bewegen, um den Dichtungsspalt zu schließen. Dies hat den Vorteil, dass der Dichtungskörper unter vorgebbaren Bedingungen weitgehend frei von Umgebungseinflüssen, wie der Temperatur des Spaltwassers einer Turbine, gebildet werden kann.

Wenn das Medium eine Flüssigkeit ist, hat dies unter anderem den Vorteil, dass durch das Abschmelzen der Dichtungskörpers gleichzeitig eine Kühlung der Dichtstelle erfolgt. Wasser ist hierfür aufgrund seiner physikalischen Eigenschaften besonders beeignet. Es können jedoch auch gasförmige Medien oder Gele verwendet werden.

Vorteilhaft ist, wenn das verbrauchte verfestigte Medium unter Aufrechterhaltung der Dichtungsfunktion durch Zuführen und Verfestigen von Medium in der Vertiefung erneuert wird. Die Dichtungsfunktion ist daher auch während der Erneuerung des Dichtungskörpers gegeben.

Eine vorteilhafte Anwendungsmöglichkeit des Verfahrens besteht darin, dass das verfestigte Medium einen mit Flüssigkeit gefüllten Raum von einem mit Gas gefüllten Raum trennt.

Dabei ist es vorteilhaft, wenn das Medium die gleiche Flüssigkeit ist wie die Flüssigkeit des mit Flüssigkeit gefüllten Raums. Dadurch werden im mit Flüssigkeit gefüllten Raum Verunreinigungen vermieden. Die Temperatur der Flüssigkeit spielt dabei eine unerwartet kleine Rolle. Wird Wasser verwendet, so ist zur Umwandlung von Wasser zu Eis bei 0° C etwa gleich viel Energie notwendig, wie Wasser um 80 Grad zu erwärmen oder abzukühlen.

Die Erfindung umfasst auch ein Verfahren zum Abdichten eines Raums zwischen zumindest teilweise gegenüberliegenden Oberflächen eines ersten Teils und eines relativ dazu rotierenden zweiten Teils, wobei das Medium durch den ersten Teil in eine ringförmige, die Drehachse des rotierenden zweiten Teils umschließende Vertiefung des ersten Teils zugeführt und in der Vertiefung verfestigt wird, sodass ein ringförmiger Dichtungskörper, wie etwa ein Gleitring, gebildet wird, und anschließend der Dichtungskörper zum Abdichten von der ersten Oberfläche gegen die zweite Oberfläche bewegt wird. Dieses Verfahren kann beispielsweise für Pumpen oder hydraulische Strömungsmaschinen, wie Turbinen, sowie im (chemischen) Apparatebau eingesetzt werden.

Dabei kann vorgesehen sein, dass der Dichtungskörper am ersten Teil gehalten wird. Auf diese Weise wird die Lage des Dichtungskörpers festgelegt.

Das Merkmal, dass der Dichtungskörper gegen den rotierenden zweiten Teil gepresst wird, ist vorteilhaft, wenn der Dichtungskörper nicht allein aufgrund der Schwerkraft die notwendige Anpressung an den rotierenden zweiten Teil erfährt.

Hierzu kann vorgesehen werden, dass der Dichtungskörper durch ein unter Druck stehendes Medium gegen den rotierenden zweiten Teil gepresst wird. Es kommt hierfür sowohl ein gasförmiges als auch ein flüssiges Medium in Frage.

Wenn der Dichtungskörper unter Aufrechterhaltung der Dichtungsfunktion durch Zuführen und Kühlen von Flüssigkeit in der Vertiefung erneuert wird, ist die Abdichtung unabhängig von der Abnützung des Dichtkörpers gegeben.

Die Vorrichtung zum Abdichten eines Raums zwischen zumindest zwei relativ zueinander bewegbaren Oberflächen, wobei an zumindest einer Oberfläche für zumindest einen Teilbereich eine Kühleinrichtung zur Verfestigung eines Mediums, insbesondere einer Flüssigkeit, wie beispielsweise Wasser, zwischen einem Teilbereich der ersten Oberfläche und einem Teilbereich der zweiten Oberfläche vorgesehen ist, ist dadurch gekennzeichnet, dass die erste Oberfläche eine Vertiefung aufweist, in welche ein Mittel zum Zuführen des Mediums mündet und welche ein Mittel zum Verfestigen des Mediums in der Vertiefung sowie ein Mittel zum Bewegen des verfestigten Mediums aus der Vertiefung von der ersten Oberfläche gegen die zweite Oberfläche aufweist.

Diese Vorrichtung kann verwendet werden, wenn der abzudichtende Raum gasgefüllt und der übrige Raum flüssigkeitsgefüllt ist oder auch wenn der abzudichtende Raum flüssigkeitsgefüllt und der übrige Raum gasgefüllt ist. Das Medium kann die gleiche Flüssigkeit sein wie in dem flüssigkeitsgefüllten abzudichtenden Raum bzw. dem übrigen Raum.

Insbesondere betrifft die Erfindung ein Verfahren zum Abdichten eines Spalts zwischen dem Gehäuse und dem Laufrad einer Turbine, insbesondere einer Überdruckturbine, wobei am Turbinendeckel in einem die Drehachse des Laufrads umschließenden ringförmigen Bereich durch Kühlen einer dort zugeführten Flüssigkeit, insbesondere Wasser, ein oberer Gleitring gebildet und/oder dass am Leitradring in einem die Drehachse des Laufrads umschließenden ringförmigen Bereich durch Kühlen einer dort zugeführten Flüssigkeit, insbesondere Wasser, ein unterer Gleitring gebildet wird. Hier ist vorgesehen, dass die Flüssigkeit durch den jeweils feststehenden Teil in eine ringförmige, die Drehachse des Laufrads umschließende Vertiefung des festehenden Teils zugeführt und in der Vertiefung verfestigt wird, sodass ein Gleitring gebildet wird, und anschließend der Gleitring zum Abdichten gegen die Oberfläche des Laufrads bewegt wird.

Der obere Gleitring kann am Turbinendeckel und/oder der untere Gleitring am Leitradring gehalten werden.

Die Erfindung betrifft entsprechend eine Vorrichtung zum Abdichten eines Spalts zwischen dem Gehäuse und dem Laufrad einer Turbine, insbesondere einer Überdruckturbine, wobei der Turbinendeckel und/oder der Leitradring eine Einrichtung zur Verfestigung eines Mediums in einem kreisringförmigen, zur Drehachse koaxialen Bereich aufweist.

Die entsprechende Vorrichtung ist dadurch gekennzeichnet, dass der Turbinendeckel und/oder der Leitradring zumindest eine kreisringförmige, zur Drehachse koaxiale, im Wesentlichen zylindrische Vertiefung aufweist, für die zumindest eine Flüssigkeitszuführung und eine Kühleinrichtung zur Bildung eines Gleitrings in der Vertiefung vorgesehen sind.

Eine einfache Ausgestaltung besteht darin, dass der obere Gleitring gegen den Laufradboden und/oder der untere Gleitring gegen den Laufradkranz gepresst wird, insbesondere durch ein unter Druck stehendes Fluid. Die Vorrichtung weist daher für die Vertiefung zumindest eine Gas- oder Flüssigkeitszuführung mit einstellbarem Druck auf.

Um die Lage der Gleitringe festzulegen, kann vorgesehen sein, dass der obere Gleitring am Turbinendeckel und/oder der untere Gleitring am Leitradring gehalten wird. Dies wird beispielsweise durch eine Verdrehsicherung erreicht, wie etwa zumindest eine achsiale Nut oder achsiale Rillen an zumindest einer Seitenwand der Vertiefung.

Um Scheibenreibungsverluste zu vermindern, kann vorgesehen werden, dass die durch Verflüssigung des oberen Gleitrings gebildete Flüssigkeit aus dem durch Gleitring, Turbinendeckel und Laufradboden umschlossenen Raum entfernt wird. Dazu wird vorteilhafterweise zumindest eine Öffnung im Turbinendeckel radial innerhalb der Vertiefung vorgesehen. An diese kann eine Pumpe angeschlossen werden.

Um die entsprechende Bildung des Gleitrings zu unterstützen, ist vorgesehen, dass die Kühleinrichtung ringförmig ausgebildet und an den zylindrischen Seitenwände der Vertiefung, insbesondere im Bereich nahe der Oberfläche des Turbinendeckels bzw. des Leitradringes, angeordnet ist.

Um das Herausgleiten des gebildeten Gleitrings aus der die Vertiefung zu erleichtern, ist vorgesehen, dass die Vertiefung, insbesondere deren Seitenwände, zumindest teilweise mit einem Material mit niedrigem Reibungskoeffizienten ausgekleidet ist oder über ein Fördersystem zur Ausbringung des Gleitrings verfügt.

Ein weiteres Merkmal der Vorrichtung besteht darin, dass in der Vertiefung oder an deren Außenkanten, die durch die zylindrischen Seitenwände der Vertiefung mit der dem Laufrad zugewandten Oberfläche des Turbinendeckels bzw. des Leitradrings gebildet werden, Dichtungsmittel, wie Dichtlippen oder ein eigenes Verschlussorgan, zur Abdichtung der Vertiefung und/oder gegebenenfalls des Spalts zwischen Gleitring und Vertiefung angebracht sind. Dadurch wird einerseits sichergestellt, dass die für die Bildung des Gleitrings in der Vertiefung abgekühlte Flüssigkeit nicht durch Eindringen von Spaltwasser ausgespült und damit die Bildung des Gleitrings verhindert wird. Andererseits kann, sobald der Gleitring aus der Vertiefung hervortritt, ein gegebenenfalls vorhandener Spalt zwischen Gleitring und Vertiefung abgedichtet werden, um ein Eindringen von Spaltwasser in die Vertiefung zu verhindern.

Um die Angriffsfläche für das Spaltwasser so gering wie möglich zu halten und dadurch den Achsschub zu verringern, ist vorgesehen, dass für den oberen Gleitring die Vertiefung im Bereich des äußeren Randes des Laufradbodens vorgesehen ist.

Damit eine möglichst gute Abdichtung erzielt und die Reibung am Gleitring gering gehalten werden kann, ist die am Laufradboden bzw. Laufradkranz angeordnete Lauffläche, an der der Gleitring aufliegt, glatt, insbesondere poliert, ausgebildet. Im Bedarfsfall kann auch eine elastisch gebettete Gegenlauffläche vorgesehen werden, um Planlaufungenauigkeiten des Laufrades (Rotors) auszugleichen.

Der Gleitring wird aufgrund seiner Herstellung in der Vertiefung so ausgebildet sein, dass seine radiale Dicke kleiner als seine achsiale Abmessung ist. Um den Gleitring im radialen Querschnitt möglichst nur auf Druck zu belasten, ist die Lauffläche senkrecht zur Ebene des Gleitrings angeordnet.

Die Erfindung wird anhand der schematischen Figuren 1 bis 5 beispielhaft erläutert.
Fig. 1 zeigt einen Längsschnitt durch eine Francisturbine mit erfindungsgemäßen Dichtkörpern.
Fig. 2 zeigt anhand eines vergrößerten Ausschnitts aus Fig. 1 die Bildung eines erfindungsgemäßen oberen Gleitrings, der im Turbinendeckel angebracht ist.
Fig. 3 zeigt einen erfindungsgemäßen oberen Gleitring in Betrieb, der im Turbinendeckel angebracht ist.
Fig. 4 zeigt einen erfindungsgemäßen unteren Gleitring in Betrieb, der im Leitradring angebracht ist.
Fig. 5 zeigt einen erfindungsgemäßen oberen Gleitring mit einem Fördersystem.

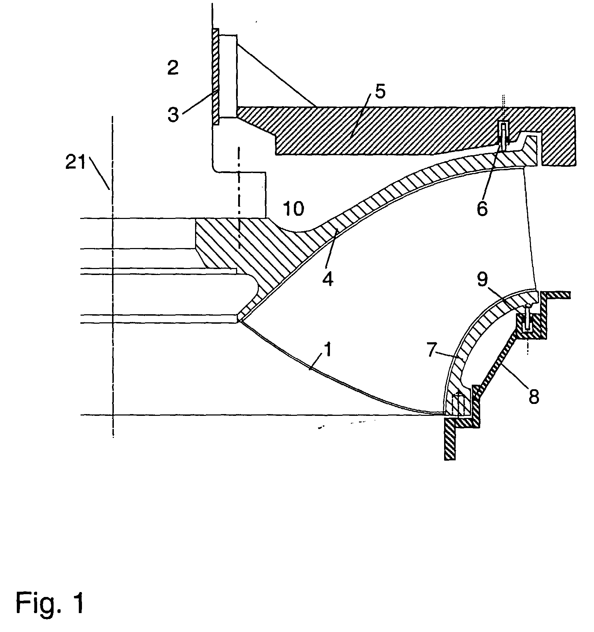

In Fig. 1 ist eine Francisturbine mit erfindungsgemäßen Dichtkörpern dargestellt. Das Laufrad 1 ist an der Welle 2 befestigt, die durch eine Stopfbuchse 3 abgedichtet ist und um die Drehachse 21 rotiert. Der Spalt zwischen Laufradboden 4 und Turbinendeckel 5 ist mittels eines Gleitrings 6 aus Eis abgedichtet. Zwischen Laufradboden 4 und Turbinendeckel 5 befindet sich ein Hohlraum 10. Der Spalt zwischen Laufradkranz 7 und Leitradring 8 ist mittels eines Gleitrings 9 aus Eis abgedichtet.

Bei herkömmlichen Francisturbinen sind die genannten Spalte nur mittels Zylinder- oder Treppenlabyrinthdichtungen abgedichtet. Die erfindungsgemäßen Dichtkörper können statt dieser Dichtungen, wie in Fig. 1 dargestellt, oder zusätzlich zu diesen Dichtungen angeordnet werden. Letzteres ist vorteilhaft, falls die erfindungsgemäße Dichtung ausfällt. Die Turbine kann damit aufgrund der vorgesehenen Spaltdichtungen und der vorgesehenen Druckentlastung gemäß dem Stand der Technik betrieben werden.

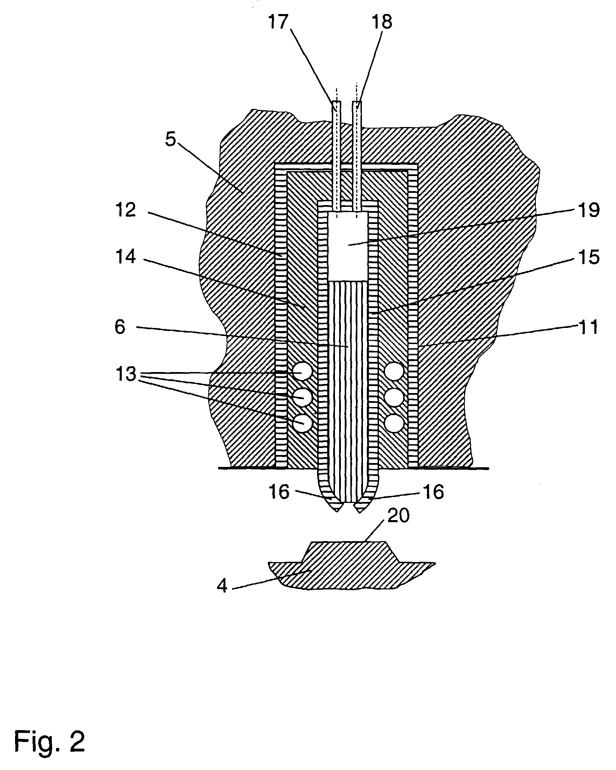

In Fig. 2 ist der noch nicht fertig ausgebildete obere Gleitring 6 zur Abdichtung gegen Spaltwasser zwischen Laufradboden 4 und Turbinendeckel 5 gezeigt. Die Vorrichtung zur Erzeugung des Gleitrings 6 aus Eis wird in einer kreisförmigen Nut 11 im Turbinendeckel 5 untergebracht. Sie besteht aus einem vorzugsweise isolierten Gehäuse 12, in dem an geeigneter Stelle Kühlschlangen 13, die in Material 14 mit hoher Wärmeleitfähigkeit eingebettet sind, verlaufen und das innen mit einer Auskleidung 15 aus Kunststoff (PE, PTFE oder ähnliche Materialien mit geringer Oberflächenenergie) versehen ist. Diese Auskleidung 15 muss verformbar sein, um die Volumsausdehnung beim Gefrieren des Eises 6 teilweise abzufangen und weiters für eine möglichst geringe Reibung zwischen der Auskleidung 15 und dem Eisring 6 sorgen, damit der Eisring gleichmäßig nach unten geschoben werden kann, falls keine eigene Fördereinrichtung vorgesehen ist. Die Auskleidung 15 reicht über die Oberfläche des Turbinendeckels 5 hinaus und bildet Dichtlippen 16 zur Abdichtung der Nut 11 zu Beginn der Eisringbildung.

Von oben wird das für die Eiserzeugung erforderliche Wasser über die als Rohre 17 ausgebildete Wasserzufuhr zugeführt. Der Wasserstand darf eine gewisse Höhe nicht überschreiten und es muss stets eine kleine mittels Druckluft 18 erzeugte Luftkammer 19 vorhanden sein, damit bei zu starker Kühlung ein komplettes Zufrieren der Vorrichtung vermieden wird und am ganzen Umfang gleich viel Wasser zugeführt werden kann.

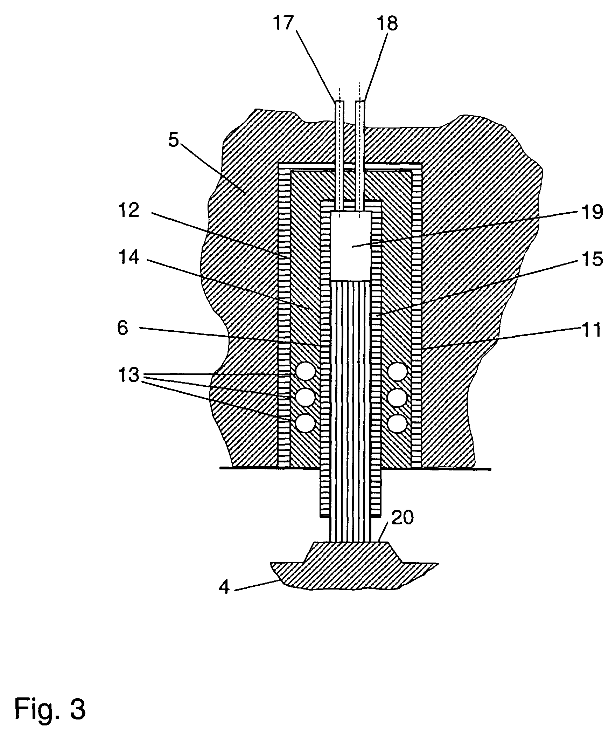

Der Eisring 6 wird erst nach dem Anfahren der Turbine gebildet. Dazu muss jedoch verhindert werden, dass das zwischen Laufradboden 4 und Turbinendeckel 5 mitrotierende Wasser den Eiserzeugungsraum - die Nut 11 - zu stark durchspült, da sonst trotz großer Kühlleistung die Entstehung des Eisrings 6 nicht möglich wäre. Dies lässt sich durch die flexiblen Dichtlippen 16 oder ein anderes Verschlussorgan erreichen. Sobald ein genügend großes Eisvolumen vorhanden ist, kann der Eisring 6 durch Druckbeaufschlagung von oben nach unten gegen die Lauffläche 20 des Laufradbodens 4 des Laufrads gedrückt werden. Ab diesem Zeitpunkt ist die Eisringdichtung in Betrieb, was in Fig. 3 dargestellt ist.

Im Dauerbetrieb wird auf den bereits gefrorenen Eisring 6 von oben Wasser zugeführt, das dort anfriert und durch den in der Luftkammer 19 herrschenden Druck von oben gegen die Lauffläche 20 gepresst wird. Es wird gleich viel Eis erzeugt wie aufgeschmolzen wird. So wird eine Dichtwirkung wie bei einem (meist federbelastetem) Gleitring gewährleistet. Die erzeugte Eismenge muss dem an der Dichtstelle auftretendem Verschleiß entsprechen. Wassermenge, Anpressluftdruck und Kühlleistung werden entsprechend gesteuert und geregelt.

Die Lauffläche 20 am Laufradboden 4 ist zur Verbesserung der Lauf- und Dichteigenschaften poliert und steht normal zur Achse des Gleitrings, die mit der Drehachse des Laufrads zusammenfällt. Als Kühlaggregate können standardisierte Industrieprodukte, wie etwa Kühlmaschinen für Lastkraftwagen, verwendet werden.

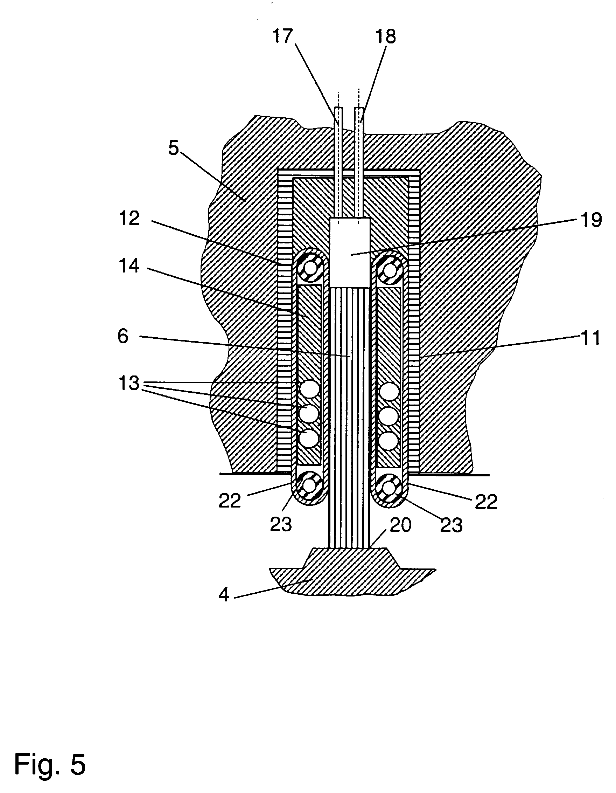

Um das Ausbringen des Eisrings 6 zu gewährleisten, kann alternativ zu einer Auskleidung 15 mit niedrigem Reibungskoeffiizienten ein Fördersystem vorgesehen werden, siehe Fig. 5. Dieses umfasst beispielsweise zu beiden Seiten des Eisrings 6 Schleifen 22, die über Rollen 23 drehbar sind. Die dem Eisring 6 zugewandten Teile der Schleifen 23 können diesen nach unten bewegen. Durch eine entsprechende Anzahl von Schleifen 23 werden zwei Förderbänder in Form eines Vielecks gebildet, die im Wesentlichen der gewünschten Kreisform des Eisrings 6 entsprechen. Eine entsprechende Vorrichtung kann selbstverständlich auch für einen unteren Eisring 9 vorgesehen werden.

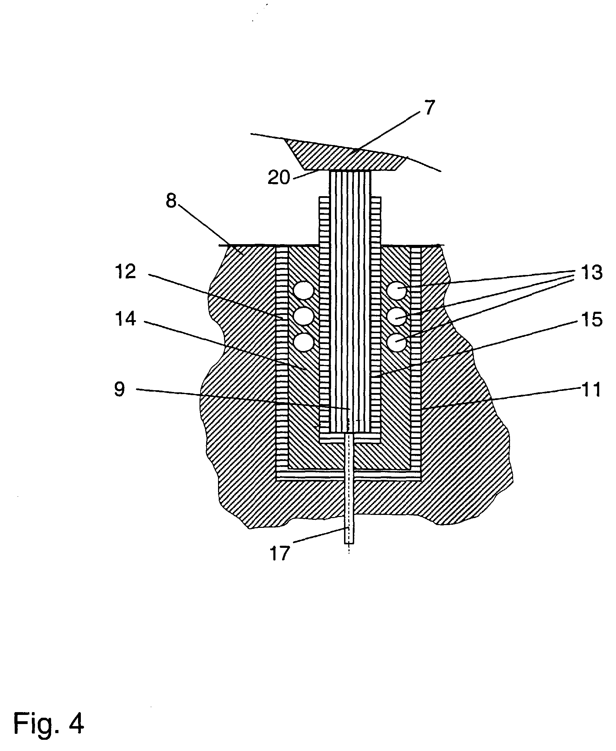

Fig. 4 zeigt den unteren Gleitring zur Abdichtung des Spaltwassers zwischen Laufradkranz 7 und Leitradring 8. Diese Vorrichtung entspricht in fast allen Punkten der Vorrichtung in Fig. 2 bzw. 3 für den oberen Gleitring 6. Der Hauptunterschied ist, dass die Luftkammer 19 entfällt und das Wasser von unten durch Leitungen 17 zugeführt wird. Eine Vereisung der Wasserzufuhr 17 oder der gesamten Vorrichtung wird dadurch vermieden, dass sich das Eis 9 aufgrund der geringeren Dichte vor allem am oberen Ende der Nut 11 bildet.

Dieser Effekt tritt natürlich auch beim oberen Gleitring 6 in Fig. 2 bzw. 3 auf, da aber die Kühlung nur in einem begrenzten Bereich, insbesondere nahe der Oberfläche des Turbinendeckels 5 erfolgt und das Eis 6 langsam nach unten bewegt wird, beeinträchtigt dies die Funktion nicht.

Die erforderliche Anpresskraft wird in Fig. 4 vom Druck des für die Eiserzeugung zugeführten Wassers 17 erzeugt.

Beim Abstellen der Turbine muß die Eiserzeugung gestoppt werden, da sonst der Eisring 6, 9 am Laufrad 1 festfrieren würde und beim Wiederanfahren Beschädigungen auftreten könnten. Dem kann abgeholfen werden, indem die Lauffläche 20 - insbesondere elektrisch - geheizt und somit losgeeist wird.

Mit der erfindungsgemäßen Turbinendichtung kann es erstmals gelingen, die Spaltverluste von Francisturbinen zu verhindern. Damit wäre eine beachtliche Wirkungsgraderhöhung sowie eine Verringerung des Achschubes zu erzielen.

Mit einer dem Prinzip der bewährten axialen Gleitringdichtung nachempfundenen Anordnung und einem kontinuierlich nachzubildendem Gleitring aus Eis lässt sich erstmals eine solche Dichtung verwirklichen. Anstelle der hoch verschleißfesten Gleitringe üblicher Gleitringdichtungen (Metalloxide, Metallkarbide, Graphit, Keramiken...) kommt ein Gleitring aus Eis zum Einsatz. Das durch die Gleitreibung abgeschmolzene Eis wird kontinuierlich nacherzeugt.

Der Gleitreibungskoeffizient von Stahl gegen Eis ist mit µ = 0,014 der geringste, den es überhaupt gibt (Kufen, Schlittschuhe, Ski). Aufgrund der physikalischen Vorgänge entsteht etwa 8 mal weniger Reibung als bei anderen günstigen Gleitpaarungen (Beispiel: Teflon gegen Stahl: µ = 0,11). Minimale Reibung ist gleichbedeutend mit minimalem Verschleiß und folglich minimaler Reibleistung.

Das gefürchtete Heißlaufen von Dichtungen kann nicht stattfinden. Das schmelzende Eis kühlt sich selbst. An der Dichtstelle können nur Temperaturen um 0° C herrschen.

Der sonst lebensdauerbegrenzende Verschleiß spielt keine Rolle, da der Gleitring kontinuierlich nachgebildet wird.

Wenn der Eisring zu 100 % dicht ist, kann man den Hohlraum zwischen Laufradboden 4 und Turbinendeckel 5 entwässern und vermeidet damit Scheibenreibungsverluste - damit ist eine weitere Wirkungsgradsteigerung um etwa 0,2 Prozent verbunden.

Wirtschaftlichkeitsrechnungen zeigen, dass die mit der Erfindung ermöglichte Leistungssteigerung um ein Mehrfaches größer als die für den Betrieb aufzuwendende Energie ist. Die erforderlichen Investitionskosten sind vergleichsweise gering.

## Patentansprüche

1. Verfahren zum Abdichten eines Raums zwischen zumindest zwei relativ zueinander bewegbaren Oberflächen, wobei zwischen einem Teilbereich der ersten Oberfläche und einem Teilbereich der zweiten Oberfläche ein Medium, insbesondere eine Flüssigkeit, durch Kühlen verfestigt wird, **dadurch gekennzeichnet, dass** das Medium durch die erste Oberfläche hindurch in eine Vertiefung der ersten Oberfläche zugeführt, in der Vertiefung verfestigt wird und anschließend das verfestigte Medium zum Abdichten von der ersten Oberfläche gegen die zweite Oberfläche bewegt wird.

2. Verfahren nach Anspruch 1, **dadurch gekennzeichnet, dass** das verbrauchte verfestigte Medium unter Aufrechterhaltung der Dichtungsfunktion durch Zuführen und Verfestigen von Medium in der Vertiefung erneuert wird.

3. Verfahren zum Abdichten eines Raums (10) zwischen zumindest teilweise gegenüberliegenden Oberflächen eines ersten Teils (5, 8) und eines relativ dazu rotierenden zweiten Teils (4, 7), wobei zwischen der Oberfläche des ersten und der des zweiten Teils ein Medium (17) durch Kühlen verfestigt wird, **dadurch gekennzeichnet, dass** das Medium (17) durch den ersten Teil (5, 8) in eine ringförmige, die Drehachse (21) des rotierenden zweiten Teils (4, 7) umschließende Vertiefung des ersten Teils (5, 8) zugeführt und in der Vertiefung verfestigt wird, sodass ein ringförmiger Dichtungskörper (6, 9), wie etwa ein Gleitring, gebildet wird, und anschließend der Dichtungskörper zum Abdichten von der ersten Oberfläche gegen die zweite Oberfläche bewegt wird.

4. Verfahren nach Anspruch 3, **dadurch gekennzeichnet, dass** der Dichtungskörper (6, 9), insbesondere durch ein unter Druck stehendes Medium (17, 18), gegen den rotierenden zweiten Teil (4, 7) gepresst wird.

5. Verfahren zum Abdichten eines Spalts zwischen dem Gehäuse (5, 8) und dem Laufrad (1, 4, 7) einer Turbine, insbesondere einer Überdruckturbine, wobei am Turbinendeckel (5) in einem die Drehachse (21) des Laufrads (1) umschließenden ringförmigen Bereich durch Kühlen einer dort zugeführten Flüssigkeit (17), insbesondere Wasser, ein oberer Gleitring (6) gebildet und/oder dass am Leitradring (8) in einem die Drehachse (21) des Laufrads (1) umschließenden ringförmigen Bereich durch Kühlen einer dort zugeführten Flüssigkeit (17), insbesondere Wasser, ein unterer Gleitring (9) gebildet wird, **dadurch gekennzeichnet, dass** die Flüssigkeit (17) durch den jeweils feststehenden Teil (5, 8) in eine ringförmige, die Drehachse (21) des Laufrads (1, 4, 7) umschließende Vertiefung des festehenden Teils (5, 8) zugeführt und in der Vertiefung verfestigt wird, sodass ein Gleitring (6, 9) gebildet wird, und anschließend der Gleitring (6, 9) zum Abdichten gegen die Oberfläche des Laufrads (1, 4, 7) bewegt wird.

6. Verfahren nach Anspruch 5, **dadurch gekennzeichnet, dass** die durch Verflüssigung des oberen Gleitrings (6) gebildete Flüssigkeit aus dem durch Gleitring (6), Turbinendeckel (5) und Laufradboden (4) umschlossenen Raum (10) entfernt wird.

7. Vorrichtung zum Abdichten eines Raums (10) zwischen zumindest zwei relativ zueinander bewegbaren Oberflächen (4, 5; 7, 8), wobei an zumindest einer Oberfläche (5, 8) für zumindest einen Teilbereich eine Kühleinrichtung (13) zur Verfestigung eines Mediums (17), insbesondere einer Flüssigkeit, wie beispielsweise Wasser, zwischen einem Teilbereich der ersten Oberfläche (5, 8) und einem Teilbereich der zweiten Oberfläche (4, 7) vorgesehen ist, **dadurch gekennzeichnet, dass** die erste Oberfläche (5, 8) eine Vertiefung (11) aufweist, in welche ein Mittel (17) zum Zuführen des Mediums mündet und welche ein Mittel (13) zum Verfestigen des Mediums in der Vertiefung (11) sowie ein Mittel (18) zum Bewegen des verfestigten Mediums (6) aus der Vertiefung (11) von der ersten Oberfläche (5, 8) gegen die zweite Oberfläche (4, 7) aufweist.

8. Vorrichtung zum Abdichten eines Spalts zwischen dem Gehäuse (5, 8) und dem Laufrad (1, 4, 7) einer Turbine, insbesondere einer Überdruckturbine, wobei der Turbinendeckel (5) und/oder der Leitradring (8) eine Einrichtung zur Verfestigung eines Mediums in einem kreisringförmigen, zur Drehachse (21) koaxialen Bereich (11) aufweist, **dadurch gekennzeichnet, dass** der Turbinendeckel (5) und/oder der Leitradring (8) zumindest eine kreisringförmige, zur Drehachse koaxiale, im Wesentlichen zylindrische Vertiefung (11) aufweist, für die zumindest eine Flüssigkeitszuführung (17) und eine Kühleinrichtung (13) zur Bildung eines Gleitrings (6, 9) in der Vertiefung (11) vorgesehen sind.

9. Vorrichtung nach Anspruch 8, **dadurch gekennzeichnet, dass** ein Mittel zum Anpressen des Gleitrings an den Laufradboden bzw. den Laufradkranz vorgesehen ist.

10. Vorrichtung nach Anspruch 9, **dadurch gekennzeichnet, dass** dieses Mittel zumindest eine Gas- oder Flüssigkeitszuführung (17, 18) mit einstellbarem Druck umfasst.

11. Vorrichtung nach einem der Ansprüche 8 bis 10, **dadurch gekennzeichnet, dass** ein Mittel zum Halten des Gleitrings (6, 9) vorgesehen ist.

12. Vorrichtung nach Anspruch 11, **dadurch gekennzeichnet, dass** dieses Mittel eine Verdrehsicherung ist, wie etwa zumindest eine achsiale Nut oder achsiale Rillen an zumindest einer Seitenwand der Vertiefung.

13. Vorrichtung nach einem der Ansprüche 8 bis 12, **dadurch gekennzeichnet, dass** ein Mittel zum Entfernen der durch Verflüssigung des Gleitrings (6) gebildeten Flüssigkeit aus dem durch Gleitring (6), Turbinendeckel (5) und Laufradboden (4) umschlossenen Raum vorgesehen ist.

14. Vorrichtung nach einem der Ansprüche 8 bis 13, **dadurch gekennzeichnet, dass** die Kühleinrichtung (13) ringförmig ausgebildet und an den zylindrischen Seitenwände der Vertiefung (11), insbesondere im Bereich nahe der Oberfläche des Turbinendeckels (5) bzw. des Leitradringes (8), angeordnet ist.

15. Vorrichtung nach einem der Ansprüche 8 bis 14, **dadurch gekennzeichnet, dass** die Vertiefung (11), insbesondere deren Seitenwände, zumindest teilweise mit einem Material (15) mit niedrigem Reibungskoeffizienten ausgekleidet ist oder über ein Fördersystem (22, 23) zur Ausbringung des Gleitrings (6, 9) verfügt.

16. Vorrichtung nach einem der Ansprüche 8 bis 15, **dadurch gekennzeichnet, dass** in der Vertiefung (11) oder an deren Außenkanten, die durch die zylindrischen Seitenwände der Vertiefung (11) mit der dem Laufrad (1) zugewandten Oberfläche des Turbinendeckels (5) bzw. des Leitradrings (8) gebildet werden, Dichtungsmittel, wie Dichtlippen (16) oder ein eigenes Verschlussorgan, zur Abdichtung der Vertiefung (11) und/oder gegebenenfalls des Spalts zwischen Gleitring (6, 9) und Vertiefung (11) angebracht sind.
